# EUROPEAN PATENT SPECIFICATION

(11) **EP 2 633 893 B1**
(45) Date of publication and mention of the grant of the patent: **25.09.2019**
(21) Application number: 13157235.6
(22) Date of filing: 28.02.2013
(51) Int. Cl.: B01D 46/00, B01D 46/44

(54) **Filter assembly**
Filteranordnung
Ensemble filtrant

(30) Priority: 29.02.2012 GB 201203514
(43) Date of publication of application: 04.09.2013
(73) Proprietor: BOFA International Limited, Poole, Dorset BH17 7DX (GB)
(72) Inventor: Cornell, David Lawrence, Poole BH17 7DX (GB)
(74) Representative: Barker Brettell LLP

(56) References cited:
- US-A- 4 787 922
- US-A- 4 859 220
- US-A- 5 711 785
- US-B1- 6 632 269

## Description

### Technical Field

The present invention relates generally to fume extraction, and in particular to filter assemblies for use in fume extraction.

### Background

In many industries such as electronics fabrication, laser marking/cutting/ engraving and pharmaceuticals, extraction systems are used to capture hazardous particulate and gaseous/vaporised matter generated by industrial processes.

Known fume extraction systems comprise multiple graded particulate filters and a gas filter (typically activated carbon based) which are housed in a single unit, together with an extraction pump. The extraction pump draws contaminated air into the unit, through the filters to remove the contaminants and outputs filtered air to the working area.

When saturated, the filters, and in particular the gas filter, must be replaced. In environments where high rates of gas/vapours are generated, the filters will need to be replaced more often.

US 4859220 discloses an air conditioning system for a computer equipment cabinet. The apparatus monitors pressure drop levels through the filters, and includes an indicator to show when change of the principal filter is required. A fume extraction apparatus having upstream and downstream filters and comprising a system for the determination of pressure differences is disclosed in US 4,787,922.

We have devised significant improvements in relation to fume extraction apparatus.

### Summary

According to the invention there is provided fume extraction apparatus comprising operational monitoring apparatus for a fume extraction filter assembly, the apparatus comprising a pressure sensor assembly, the pressure sensor assembly configured to be capable of sensing fluid pressure at an outlet to a downstream filter, fluid pressure from an inlet to an upstream filter, and fluid pressure from fluid flowing from an outlet of the upstream filter to the inlet of the downstream filter, the apparatus further comprising a data processor to process fluid pressure difference values between the respective inlet and outlet of each filter, characterised in that and wherein the data processor arranged to calculate average values of the measurements and thereby determine a saturation level of each filter, and the memory storing multiple predetermined saturation levels for each filter, with different levels indicative of different extents of saturation of each filter from the pressure values, and the data processor arranged to determine when a determined saturation reaches a predetermined saturation level and to thereby cause a pre-emptive alert signal to be generated.

Preferably the data processor configured to use a respective pressure difference value to determine a filter condition status for each filter. Preferably the filter condition status is indicative of the extent of saturation of the respective filter.

The pressure sensor assembly preferably comprises a conduit to fluidically connect a region of fluid pressure to be measured to a respective pressure sensor.

The apparatus preferably further comprises a flow measurement device configured to be capable of providing a measure of fluid flow rate exiting the filter assembly. Preferably the fluid flow rate is measured at or downstream of the fluid outlet of the downstream filter. The measure of said fluid flow rate is preferably obtained using a Pitot tube device and a pressure sensor.

The data processor is preferably arranged to issue a control signal to an extraction fan of the filter assembly, in response to the measure of the fluid flow rate exiting the filter assembly so as to substantially maintain a required/target flow rate. Preferably the control signal causes control of the speed of the extraction fan. In this arrangement, the signals from the fluid flow measurement device are used a feedback signal to control the speed of the fan.

The apparatus preferably comprises a user interface which comprises a display to allow the user to view operational data derived from the pressure sensor assembly and/or the flow measurement device. Preferably the user interface comprises a user input which allows a user to set a required fluid flow rate.

### Brief Description of the Drawings

One embodiment of the invention will now be described, by way of example only, with reference to the following drawings in which:
**Figure 1** is schematic view of a fume extraction filter assembly,
**Figure 2** is a block diagram of a data processor and various functional components connected to the data processor, and
**Figure 3** is a flow diagram.

### Detailed Description

There is now described an operational monitoring apparatus for a fume extraction filter assembly which, as will be described in detail below, provides automatic flow control, flow reading and filter saturation status in relation to a fume extraction unit comprising a two-stage filter assembly. As will be described in more detail below, the apparatus includes pressure sensors which are used to measure a pressure drop across each filter.

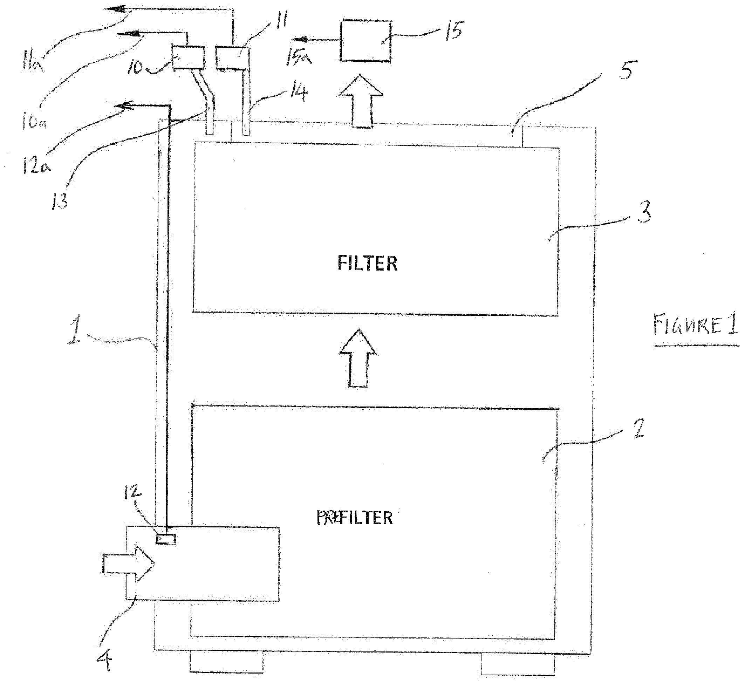

With reference initially to Figure 1, there is shown a fume extraction filter assembly comprising a housing 1, a (downstream) (pre-)filter 2 and a (upstream) filter 3, an inlet duct 4 and an outlet 5. In overview, contaminated air enters through the inlet duct 4 passes through the filter 2 and the filter 3, and exits at the outlet 5. The air is drawn through the assembly by an extraction fan (not illustrated) which is located downstream of the outlet 5.

The filter 2 comprises a filter medium which removes particles from the air prior to it reaching the filter 3. This ensures that the filter 3 is protected from particles (and in particular larger/heavier particles) reaching and causing damage thereto. The filter 3 preferably comprises a High-Efficiency Particulate Air (HEPA) filter.

The filter assembly is provided with a pressure sensor assembly comprising a first pressure sensor 10, a pressure sensor 11 and a pressure sensor 12. Each of the sensors 10 and 11 is fluidically connected with two fluid flow regions of the filter assembly, by way of conduits 13 and 14. The sensor 10 is connected to air flowing from the filter 2 to the filter 3 by way of the conduit 13. The sensor 110 is fluidically connected to air exiting the filter 3 through the outlet 5. The pressure sensor 12 senses pressure of fluid flowing through the inlet 4, into the filter assembly. Each pressure sensor thus receives a respective pressure inputs (on respective pressure sensitive surfaces) and is configured to output a signal (10a, 11 a, and 12a respectively) indicative of the pressure value at a respective fluid flow region. The output signals are received by a data processor so as to calculate pressure differences across each filter, which is discussed in more detail below.

The pressure sensor assembly further comprises a flow measurement device 15 which comprises a Pitot tube. The device 15 is positioned so as provide a measure of fluid flow rate of air exiting the filter 3, with the sensor located in the fluid flow stream leaving the filter 3. A signal 15a, indicative of the fluid flow rate, is output by the device 15.

The sensors 10 and 11 are housed in a space of the housing 1 which is separate from the volume of the housing 1 in which the filters are held. It is to be noted that the pressure sensor 12 is located within the volume of the inlet 4, and exposed to the flow of air therethrough. This positioning of the sensor 12 advantageously means that the sensor will detect whether there is a blockage within the inlet. If so, a user can be informed of this by way of an alarm signal (audio and/or visual) being activated.

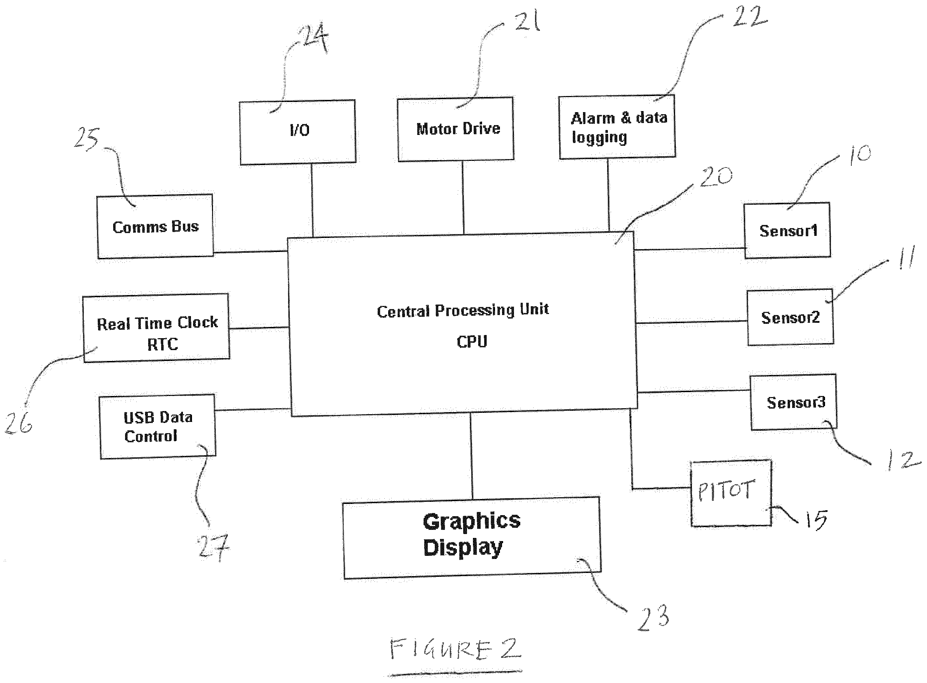

Reference is now made to Figure 2 which shows a schematic representation of a data processor 20, and various functional components which are connected thereto. The sensors 10, 11 and 12, as discussed above, are shown connected to the processor as is the motor drive 21 of the extraction fan. Also connected to the data processor 20 is a memory 22, in the form of a rolling buffer, which stores details of alarms which have been raised and for data logging purposes. In this latter regard, the memory 22 stores a cache of analytical data enabling users to download performance and operating parameters for evaluation purposes. Data from the sensors is stored as time-stamped data which can then be used for diagnostic purposes (for example in the event of a system failure). The stored data could be loaded onto a connected computer device, or stored on a portable data stored device, and then the data loaded onto a remote computer device. Advantageously, by analysis of the stored data downtime can be minimised.

A graphics display 23 is also shown as being connected to the data processor 20, which displays operational information/values/parameters to the user, such as air flow, target airflow rate, prefilter condition status, filter condition status, temperature, run time, operational status of the extraction fan, system alarms and warnings.

An I/O interface 24 allows the apparatus to be connected to an external device by way of a USB connection.

A Comms Bus 25 which allows connection to external equipment. There is also connected to the data processor 20 a real-time clock 26.

Use of the apparatus will now be described.

By way of a suitable user input device (not illustrated) a user can advantageously set a target airflow rate through the filter assembly. Over time during use, the filters progressively collect contaminants, thus progressively reduce the surface area available for air to pass through as they gradually become increasingly blocked/saturated. In order to maintain a required airflow rate, the data processor 20 is operative to compare at the sensed flow rate with the target flow rate, and where the sensed flow rate is lower than the target flow rate, the data processor 20 is operative to output a control signal to the extraction fan motor 21 so as to increase the fan speed, and therefore increase the flow rate exciting the filter 3.

At a certain point in time, however, the filter 2 and filter 3, although not necessarily simultaneously, reach a condition where they have become saturated with contaminant to the extent that they need to be replaced. Advantageously, the signals obtained from the pressure sensors 10 11 and 12, enable the saturation levels (or put another way, remaining operational lifetime) to be monitored. Pressure signals from each sensor are caused to be stored in the memory 22. Pressure measurement samples are taken periodically (for example at the rate of two hundred per second) and then time-stamped and stored in the memory 22. The data processor 20 is configured to take averages of the stored values to determine a saturation/blockage level for each filter. In particular, the processor is arranged to calculate, for each sampling instance, the pressure difference across each filter by subtracting the pressure value at the inlet 4 from that exiting the filter 2, and to subtract the pressure of air entering the filter 3, from the measured pressure leaving the filter 3. Within the memory 22 there is stored predetermined saturation levels which correspond to when a user should be altered and take any necessary action, based on measured/calculated pressure differences. For example, the user may be alerted, via the display 23, when a filter has reached seventy-five percent saturation, ninety-five percent saturation and one hundred percent saturation. Use of pre-emptive alerts ensure that the operator has a replacement filter available when the filter currently in place reaches one hundred percent saturation, thus, importantly, minimising downtime. Such status outputs are filter specific and so the user knows the filter status in respect of each filter.

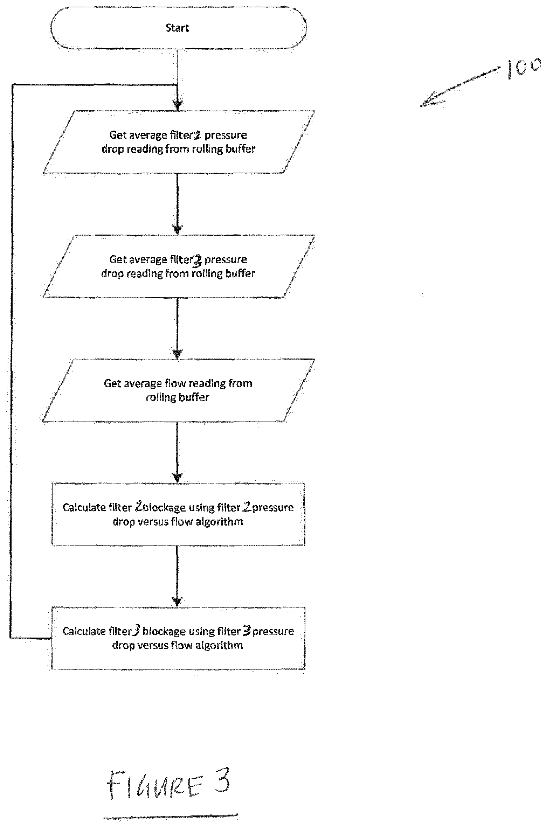

The process of determining saturation levels executed by the data processor 20 is shown in the flow diagram 100 in Figure 3.

Highly advantageously, the above apparatus allows an accurate determination of the saturation level of each filter, and prompts the user to take the necessary action to ensure that a replacement filter is timely installed. The apparatus also monitors and controls air flow rate through the filters. Further advantageously, the information displayed to the user is both clear and significantly facilitates operation of a filter assembly of a fume extraction system. Further, the apparatus is straightforward to use.

## Claims

1. Fume extraction apparatus (1) comprising operational monitoring apparatus for a fume extraction filter assembly, the apparatus comprising a pressure sensor assembly (10, 11, 12), the pressure sensor assembly configured to be capable of sensing fluid pressure at an outlet to a downstream filter (3), fluid pressure from an inlet to an upstream filter (2), and fluid pressure from fluid flowing from an outlet of the upstream filter to the inlet of the downstream filter, the apparatus further comprising a data processor (20) to process fluid pressure difference values between the respective inlet and outlet of each filter,**characterised in that** and wherein the data processor arranged to calculate average values of the measurements and thereby determine a saturation level of each filter, and the memory storing multiple predetermined saturation levels for each filter, with different levels indicative of different extents of saturation of each filter from the pressure values, and the data processor arranged to determine when a determined saturation reaches a predetermined saturation level and to thereby cause a pre-emptive alert signal to be generated.

2. Fume extraction apparatus of claim 1 in which the data processor (20) is configured to use a respective pressure difference value to determine a filter condition status for each filter (10, 11, 12).

3. Fume extraction apparatus of claim 2 in which the filter condition status is indicative of the extent of saturation of the respective filter.

4. Fume extraction apparatus of any preceding claim in which the pressure sensor assembly comprises a conduit (13) to fluidically connect a region of fluid pressure to be measured to a respective pressure sensor.

5. Fume extraction apparatus of any preceding claim in which the apparatus comprises a flow measurement device (15) configured to be capable of providing a measure of fluid flow rate exiting the filter assembly.

6. Fume extraction apparatus of claim 5 in which the fluid flow rate is measured at or downstream of the fluid outlet of the downstream filter.

7. Fume extraction apparatus of claim 5 or claim 6 in which the measure of said fluid flow rate is obtained using a Pitot tube device and a pressure sensor.

8. Fume extraction apparatus of any preceding claim in which the data processor is arranged to issue a control signal to an extraction fan of the filter assembly, in response to the measure of the fluid flow rate exiting the filter assembly so as to substantially maintain a required/target flow rate.

9. Fume extraction apparatus of claim 8 in which the control signal causes control of the speed of the extraction fan.

10. Fume extraction apparatus of any preceding claim, when appended to claim 5 which comprises a user interface which comprises a display to allow a user to view operational data derived from the pressure sensor assembly and/or the flow measurement device.

11. Fume extraction apparatus of claim 10 in which the user interface comprises a user input which allows a user to set a required fluid flow rate.

## Patentansprüche

1. Rauchabsaugvorrichtung (1), umfassend eine Betriebsüberwachungsvorrichtung für eine Filteranordnung zur Rauchabsaugung, wobei die Vorrichtung eine Drucksensoranordnung (10, 11, 12) umfasst, wobei die Drucksensoranordnung dafür konfiguriert ist, einen Fluiddruck an einem Auslass zu einem stromabwärtigen Filter (3), einen Fluiddruck an einem Einlass zu einem stromaufwärtigen Filter (2) und einen Fluiddruck von Fluid, das von einem Auslass des stromaufwärtigen Filters zu dem Einlass des stromabwärtigen Filters fließt, erfassen zu können, wobei die Vorrichtung weiter einen Datenprozessor (20) zum Verarbeiten von Druckdifferenzwerten des Fluids zwischen dem jeweiligen Einlass und Auslass jedes Filters umfasst, **dadurch gekennzeichnet, dass** und wobei der Datenprozessor dafür angeordnet ist, Durchschnittswerte der Messungen zu berechnen und dadurch einen Sättigungsgrad jedes Filters zu ermitteln, und der Speicher mehrere vorbestimmte Sättigungsgrade für jedes Filter speichert, wobei unterschiedliche Grade unterschiedliche Ausmaße der Sättigung jedes Filters von den Druckwerten angeben, und der Datenprozessor dafür angeordnet ist, zu ermitteln, wann eine ermittelte Sättigung einen vorbestimmten Sättigungsgrad erreicht, und dadurch bewirkt, dass ein präventives Alarmsignal erzeugt wird.

2. Rauchabsaugvorrichtung nach Anspruch 1, wobei der Datenprozessor (20) dafür konfiguriert ist, einen jeweiligen Druckdifferenzwert zum Ermitteln eines Filterzustandsstatus für jedes Filter (10, 11, 12) zu verwenden.

3. Rauchabsaugvorrichtung nach Anspruch 2, wobei der Filterzustandsstatus das Ausmaß der Sättigung des jeweiligen Filters angibt.

4. Rauchabsaugvorrichtung nach einem vorhergehenden Anspruch, wobei die Drucksensoranordnung eine Leitung (13) umfasst, um eine Fluidverbindung zwischen einem Bereich eines zu messenden Fluiddrucks und einem jeweiligen Drucksensor herzustellen.

5. Rauchabsaugvorrichtung nach einem vorhergehenden Anspruch, wobei die Vorrichtung eine Strömungsmessvorrichtung (15) umfasst, die dafür konfiguriert ist, ein Maß der Fluidströmungsrate, die aus der Filteranordnung austritt, bereitstellen zu können.

6. Rauchabsaugvorrichtung nach Anspruch 5, wobei die Fluidströmungsrate an dem oder stromabwärts des Fluidauslass(es) des stromabwärtigen Filters gemessen wird.

7. Rauchabsaugvorrichtung nach Anspruch 5 oder Anspruch 6, wobei das Maß der Fluidströmungsrate mittels einer Pitot-Rohr-Vorrichtung und eines Drucksensors erhalten wird.

8. Rauchabsaugvorrichtung nach einem vorhergehenden Anspruch, wobei der Datenprozessor dafür angeordnet ist, ein Steuersignal an einen Absauglüfter der Filteranordnung auszugeben, als Reaktion auf das Maß der Fluidströmungsrate, die aus der Filteranordnung austritt, um im Wesentlichen eine erforderliche/Zielströmungsrate aufrechtzuerhalten.

9. Rauchabsaugvorrichtung nach Anspruch 8, wobei das Steuersignal eine Steuerung der Drehzahl des Absauglüfters bewirkt.

10. Rauchabsaugvorrichtung nach einem vorhergehenden Anspruch, wenn an Anspruch 5 angehängt, die eine Benutzerschnittstelle umfasst, welche eine Anzeige, die einem Benutzer das Ansehen von Betriebsdaten gestattet, die von der Drucksensoranordnung stammen, und/oder die Strömungsmessvorrichtung umfasst.

11. Rauchabsaugvorrichtung nach Anspruch 10, wobei die Benutzerschnittstelle eine Benutzereingabe umfasst, die einem Benutzer das Festlegen einer erforderlichen Fluidströmungsrate gestattet.

## Revendications

1. Appareil d'extraction de fumée (1) comprenant un appareil de surveillance opérationnel pour un ensemble filtre d'extraction de fumée, l'appareil comprenant un ensemble capteur de pression (10, 11, 12), l'ensemble capteur de pression étant configuré pour être capable de détecter une pression de fluide à une sortie vers un filtre en aval (3), une pression de fluide à partir d'une entrée vers un filtre en amont (2), et une pression de fluide d'un fluide s'écoulant d'une sortie du filtre en amont à l'entrée du filtre en aval, l'appareil comprenant en outre un processeur de données (20) pour traiter des valeurs de différence de pression de fluide entre les entrée et sortie respectives de chaque filtre, le processeur de données étant agencé pour calculer des valeurs moyennes des mesures et ainsi déterminer un niveau de saturation de chaque filtre, et la mémoire stockant de multiples niveaux de saturation prédéterminés pour chaque filtre, avec différents niveaux indiquant différentes étendues de saturation de chaque filtre à partir des valeurs de pression, et le processeur de données étant agencé pour déterminer lorsqu'une saturation déterminée atteint un niveau de saturation prédéterminé et ainsi amener un signal d'alerte préventif à être généré.

2. Appareil d'extraction de fumée selon la revendication 1, dans lequel le processeur de données (20) est configuré pour utiliser une valeur de différence de pression respective pour déterminer un état de condition de filtre pour chaque filtre (10, 11, 12).

3. Appareil d'extraction de fumée selon la revendication 2, dans lequel l'état de condition de filtre indique l'étendue de saturation du filtre respectif.

4. Appareil d'extraction de fumée selon l'une quelconque des revendications précédentes, dans lequel l'ensemble capteur de pression comprend un conduit (13) pour relier fluidiquement une région de pression de fluide à mesurer à un capteur de pression respectif.

5. Appareil d'extraction de fumée selon l'une quelconque des revendications précédentes, dans lequel l'appareil comprend un dispositif de mesure d'écoulement (15) configuré pour être capable de fournir une mesure de débit de fluide sortant de l'ensemble filtre.

6. Appareil d'extraction de fumée selon la revendication 5, dans lequel le débit de fluide est mesuré à ou en aval de la sortie de fluide du filtre en aval.

7. Appareil d'extraction de fumée selon la revendication 5 ou la revendication 6, dans lequel la mesure dudit débit de fluide est obtenue à l'aide d'un dispositif de tube de Pitot et d'un capteur de pression.

8. Appareil d'extraction de fumée selon l'une quelconque des revendications précédentes, dans lequel le processeur de données est agencé pour émettre un signal de commande vers un ventilateur d'extraction de l'ensemble filtre, en réponse à la mesure du débit de fluide sortant de l'ensemble filtre de façon à sensiblement maintenir un débit requis/cible.

9. Appareil d'extraction de fumée selon la revendication 8, dans lequel le signal de commande entraîne une commande de la vitesse du ventilateur d'extraction.

10. Appareil d'extraction de fumée selon l'une quelconque des revendications précédentes, lorsque prise en dépendance de la revendication 5, comprenant une interface utilisateur qui comprend un dispositif d'affichage pour permettre à un utilisateur de voir des données de fonctionnement issues de l'ensemble capteur de pression et/ou du dispositif de mesure d'écoulement.

11. Appareil d'extraction de fumée selon la revendication 10, dans lequel l'interface utilisateur comprend une entrée d'utilisateur qui permet à un utilisateur de définir un débit de fluide requis.
